# EUROPÄISCHE PATENTSCHRIFT

(11) **EP 0 353 345 B1**
(45) Veröffentlichungstag und Bekanntmachung des Hinweises auf die Patenterteilung: **05.01.1994**
(21) Anmeldenummer: 88118374.3
(22) Anmeldetag: 04.11.1988
(51) Int. Cl.: B65D 85/50, B65D 51/28, B65D 25/08, B65D 81/32

(54) **Transportbehälter, insbesondere für vitale menschliche Zähne**
Container for human teeth
Emballage pour dents humaines

(30) Priorität: 30.07.1988 DE 8809755 U
(43) Veröffentlichungstag der Anmeldung: 07.02.1990
(73) Patentinhaber: Kirschner, Horst, Prof.Dr.med.dent., D-35392 Giessen (DE)
(72) Erfinder: Kirschner, Horst, Prof.Dr.med.dent., D-35392 Giessen (DE)
(74) Vertreter: Missling, Arne, Dipl.-Ing.

(56) Entgegenhaltungen:
- DE-A- 2 010 942
- US-A- 2 653 609
- US-A- 3 860 114

## Beschreibung

Die Erfindung betrifft einen Transportbehälter mit einem Behälterunterteil und einem wiederverschließbaren Deckel nach DE-A-2010942, geeignet für eine physiologische Aufbewahrung traumatisch eliminierter oder sehr stark gelockerter, noch lebensfähiger Zähne, wobei der Transportbehälter luft- und bakteriendicht verschließbar und Zumindest zum Teil mit einer Flüssigkeit gefüllt ist, daß im Transportbehälter eine von außen ohne Öffnung des Transportbehälters mit dem Behälterinnenraum in Verbindung bringbare, mit einer Trockensubstanz gefüllte, dicht verschlossene Kammer angeordnet ist.

Der Erfindung liegt die Aufgabe Zugrunde, einen Transportbehälter zur Aufnahme traumatisch eliminierter oder sehr stark gelockerter Zähne für die Verwendung direkt am Unfallort zu schaffen, der den Transport der Zähne bis zu ihrer Reimplantation ohne entscheidenden Vitalitätsverlust der Zahngewebe zuläßt.

Diese Aufgabe wird erfindungsgemäß dadurch gelöst, daß die Substanz ein Zellnährmedium ist, dem pilz- und/oder bakterienwachstumshemmende Substanzen zugesetzt sind, daß die zueinander im wesentlichen parallelen Wandungen der Kammer beim Verschließen des Transportbehälters zwischen dem Behälterunterteil und dem Deckel klemmbar sind, daß die Kammer durch die im wesentlichen parallel zueinander verlaufenden Wandungen als einfacher zylindrischer Raum ausgebildet ist und daß der Deckel eine ringförmige, dem Behälterinnenraum zugewandte, mit der obigen Wandung dicht verbundene Haltefläche aufweist.

Aus der DE-Offenlegungsschrift 20 10 942 ist zwar bereits ein Flaschenverschluß mit einer Trockensubstanzkammer bekannt, bei dem eine vorrätig gehaltene Trockensubstanz bei Bedarf mit einer in der zugehörigen Flasche befindlichen Flüssigkeit mischbar ist, wobei speziell an die zeitlich und örtlich wählbare Arzneimittelbereitung gedacht ist. Die Erfindung geht von einer solchen Anordnung aus. Dabei wurde gefunden, daß es durchaus möglich ist, eine derartige Anordnung auch für den eingangs genannten, ganz speziellen Verwendungszweck herzurichten, wenn man nämlich das Zellmedium nicht nur zur Nährstoff-Versorgung des an den Zähnen haftenden, vitalen Gewebes, sondern auch zur Wachstumshemmung oder Zerstörung von Bakterien oder Pilzen durch Zusatz entsprechender Inhibitoren heranzieht.

Der Verschluß, der für die Aufbewahrungssubstanz vorgesehenen Kammer ist dabei nahezu hermetisch, weil diese in den Schraubvorgang beim Verschließen eingebunden ist. Das ist besonders wichtig, weil eine Verunreinigung der Trockensubstanz auf diese Weise sicher ausgeschlossen wird. Andererseits läßt sich aber der Verschluß bei Bedarf auch wieder rasch lösen, im Gegensatz zu einer Anordnung, bei der das Verschlußorgan zugebördelt wird, wie das beispielsweise in der US-Patentschrift 2,653,609 beschrieben ist.

Der erfindungsgemäße Transportbehälter zeichnet sich also durch eine Reihe erheblicher Vorteile aus. Da die Flüssigkeit und die Aufbewahrungstrockensubstanz getrennt voneinander im Transportbehälter aufgehoben werden können, ist es möglich, den Transportbehälter über einen Zeitraum von mehreren Jahren in einsatzbereitem Zustand zu halten. Dies erweist sich als besonders vorteilhaft, wenn der Transportbehälter zu einer Notfallausrüstung gehört, wie sie beispielsweise in Haushaltungen, Kraftfahrzeugen, Schulen und Sportvereinen, Handwerks- und Industriebetrieben, Bundeswehrkrankenhäusern und Bundeswehrsanitätsstationen, Unfallrettungswagen, Anästhesieabteilungen, Unfallchirurgischen Abteilungen und Arzt- und Zahnarztpraxen vorhanden ist.

Eine ständige Überwachung des Behälterinhalts, wie dies beispielsweise bei einem in Lösung befindlichen Gewebsnährmedium mit nur beschränkter zeitlicher Verwendbarkeit erforderlich wäre, entfällt bei der vorliegenden Erfindung. Die lange Zeitdauer der Einsatzbereitschaft des erfindungsgemäßen Transportbehälters ergibt sich daraus, daß eine gebrauchsfertige Mischung von Flüssigkeit und Gewebsnährmedium in Trockensubstanz erst direkt vor dem Einsatz, also am Unfallort, erfolgt. Da der Transportbehälter luft- und bakteriendicht verschlossen ist, wird eine Verunreinigung des Transportbehälters während der Lagerung nicht eintreten.

In einer besonders vorteilhaften Ausgestaltungsform der Erfindung liegt die Flüssigkeit in Form bidestillierten Wassers vor. Im Einzelfall am Unfallort wird die Kammer mit der Trockensubstanz geöffnet und in das Wasser eingebracht, ohne den Transportbehälter öffnen zu müssen. Dadurch kann direkt vor Benutzung eine Gewebsnährlösung zur Aufbewahrung der Zähne hergestellt werden. Dies erweist sich als besonders vorteilhaft, da relativ kompliziert zusammengesetzte Nährmedien unter Zusatz von Antibiotika und Fungiziden lediglich über einen Zeitraum von einigen Monaten voll wirksam haltbar sind. Es wäre daher nicht praktikabel, den Transportbehälter mit bereits fertig angesetztem Gewebsnährmedium in Notfallausrüstungen aufzunehmen, da wie erwähnt eine ständige Kontrolle der Verwendbarkeit der physiologischen Nährlösung erforderlich wäre.

Die Aufbewahrung eines bei einem Unfall herausgebrochenen Zahnes in einem speziellen Gewebsnährmedium erweist sich deshalb als erforderlich, da das der Zahnwurzeloberfläche anhaftende vitale Gewebe traumatisch eliminierter Zähne je nach Unfallsituation nach 20 bis 40 Minuten ausgetrocknet ist, so daß die Zellen nicht mehr regenerationsfähig sind. In diesem Zustand ist es nicht mehr möglich, den Zahn später erfolgreich zu reimplantieren. Ein traumatisch eliminierter Zahn muß nach dem Unfall so schnell wie möglich in ein zellphysiologisches Flüssigmedium eingebracht werden, um auf diese Weise die speziellen Zellen am Leben zu erhalten, die den Wiedereinwachsprozeß des Zahnes ermöglichen. Durch das Einbringen des traumatisch eliminierten Zahnes in ein physiologisches Gewebsnährmedium ist es möglich, die an der Wurzeloberfläche anhaftenden Zellen über einen Zeitraum von mindestens 8 bis 12 Stunden lebensfähig zu erhalten. Dieser Zeitraum ist üblicherweise ausreichend, um einen Zahnarzt aufzusuchen, der eine autoplastische Reimplantation des traumatisch eliminierten Zahnes vornimmt. Unter Verwendung des erfindungsgemäßen Transportbehälters ist es somit zum einen möglich, das Gewebsnährmedium direkt frisch anzusetzen und zum anderen den traumatisch eliminierten Zahn sofort in das Gewebsnährmedium einzubringen. Durch diese Vorgehensweise ist die Erhaltung traumatisch eliminierter Zähne zu einem hohen Prozentsatz möglich.

In einer vorteilhaften Ausgestaltungsform des erfindungsgemäßen Transportbehälters ist eine dem Behälterinnenraum zugewandte Wandung der Kammer durch Verformung des Deckels aufreißbar. Eine besonders vorteilhafte Ausführung besteht darin, daß der Deckel einen am Deckeloberteil innen ausgebildeten, im Bereich der Ausnehmung der Haltefläche in die Kammer einbringbaren Durchtrenndorn aufweist.

Diese Ausgestaltungsform erweist sich als besonders vorteilhaft. Es kann das Ansetzen der Aufbewahrungslösung auf besonders einfache Weise durch Verformung des Deckels von außen erfolgen, so daß die Bedienungsperson auch ohne Übung oder besondere Anleitung den Transportbehälter in einen einsatzfähigen Zustand bringen kann. Ein weiterer besonderer Vorteil dieser Ausgestaltungsform liegt darin, daß die durchtrennte Kammerwandung fest an dem Deckel haftet, so daß beim Aufschrauben des Deckels zum Einlegen des oder der ausgebrochenen Zähne keine Störung durch die Kammerwandung auftreten kann. Es wird insbesondere verhindert, daß die eingebrachten Zähne durch frei schwimmende Teile der Kammerwandung beschädigt werden können.

Dadurch, daß der Deckel eine ringförmige, mit einer Wandung verbundene Haltefläche aufweist und zumindest mit einem in seinem mittleren Bereich angeordneten Durchtrenndorn versehen ist, ist es möglich, in gezielter Weise die beiden Wandungen der Kammer zu verformen bzw. zu durchstoßen. Da die mit der Haltefläche verbundene Wandung eine geringere freie Fläche aufweist, verformt sie sich bei einer Verformung des Deckels unter Einwirkung des Durchtrenndorns anders als die über die gesamte Querschnittfläche des Behälterunterteils frei verformbare, der Flüssigkeit zugewandte Wandung. Letztere wird bei einer Bewegung des Dorns stärker trichterartig verformt, wodurch ein besseres und sichereres Austreten der Aufbewahrungssubstanz, welche üblicherweise lose in der Kammer angeordnet ist, beispielsweise in Pulver- oder Granulatform, gewährleistet wird.

In einer besonders günstigen Ausgestaltung der Erfindung ist die Wandung der Kammer, welche mittels des Dorns durchtrennt werden soll, in Form einer Metallfolie oder einer kunststoffbeschichteten Metallfolie ausgebildet. Dadurch wird zum einen ein sicherer Abschluß der Kammer gewährleistet, zum anderen bildet sich bei einem Durchtrennen oder Durchstoßen der Wandung mittels des Dorns ein ausreichender Auslaßtrichter, durch den die Aufbewahrungstrockensubstanz aus der Kammer in die Flüssigkeit überführt werden kann.

Im folgenden wird die Erfindung anhand von eines Ausführungsbeispieles in Verbindung mit der Zeichnung beschrieben. Dabei zeigt:

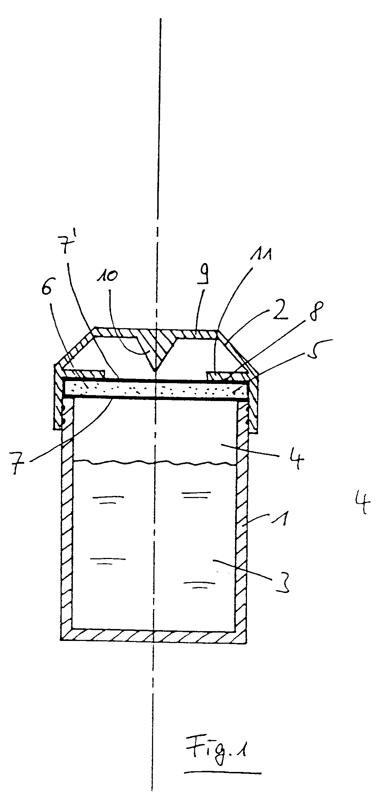

- Fig. 1: eine schematische Schnittansicht eines ersten Ausführungsbeispiels des erfindungsgemäßen Transportbehälters.

Der in Fig. 1 gezeigte Transportbehälter weist ein Behälterunterteil 1 auf, welches beispielsweise zylindrisch ausgestaltet ist. Das Behälterunterteil 1 kann aus Glas oder Kunststoff, bevorzugterweise durchsichtigem Glas oder Kunststoff, gefertigt sein. Die Wandstärken des Behälterunterteils 1 entsprechen den üblichen Abmessungen und sind abhängig von der Gesamtdimensionierung des Transportbehälters. Der Behälterunterteil 1 kann beispielsweise eine Höhe von 5 cm und einen Durchmesser von 3 cm aufweisen.

Der Behälterunterteil 1 ist mittels eines Deckels 2 luft- und bakteriendicht verschließbar, wobei der Verschluß in Form eines Schraubgewindes ausgebildet ist, welches in Fig. 1 nur schematisch dargestellt ist. Das Gewinde kann beispielsweise drei bis sechs Schraubwindungen aufweisen.

Der Deckel 2 ist bevorzugterweise aus einem verformbaren Kunststoff ausgebildet, so daß ein Deckeloberteil 9 durch Druck in Richtung auf den Behälterinnenraum 4 hin verformbar ist.

Der Deckel 2 weist an seinem Deckeloberteil 9 einen Dorn 10 auf, welcher dem Behälterinnenraum 4 zugewandt und beispielsweise kegelförmig oder pyramidenförmig ausgebildet ist. Weiterhin ist der Deckel 2 angrenzend an den mit dem Gewinde versehenen Bereich mit einem Ringflansch 11 ausgestattet, durch dessen zentrische Ausnehmung bei einer Veformung des Deckels 2 bzw. des Deckeloberteiles 9 der Dorn 10 durchführbar ist.

Zwischen dem Deckel 2 und dem Behälterunterteil 1 ist eine mit einer Aufbewahrungssubstanz 5 gefüllte Kammer 6 vorgesehen, welche zwei im wesentlichen zueinander Parallele Wandungen 7, 7' aufweist, die den Innenraum der Kammer 6 begrenzen. Der äußere Umfang der Kammer 6 ist zylindrisch ausgebildet. Die Kammer 6 ist so dimensioniert, daß ihr Außendurchmesser dem Außendurchmesser des Behälterunterteils 1 entspricht, so daß die Kammer 6, wie in Fig. 1 gezeigt, beim Aufschrauben des Deckels 2 zwischen dem Behälterunterteil 1 und dem Deckel 2 klemmbar ist.

Um beim Abnehmen des Deckels 2 zum Einlegen eines Zahnes zu vermeiden, daß die Kammer 6 lose ist und abfallen kann, kann deren obere Wandung 7' mit einer Haltefläche 8 des Ringflansches 11 verbunden sein, beispielsweise durch Verkleben.

Das Behälterunterteil 1 ist mit einer Flüssigkeit 3, beispielsweise bidestilliertem Wasser gefüllt.

Die Fig. 1 zeigt den verwendungsbereiten Zustand des erfindungsgemäßen Transportbehälters, in welchem dieser über einen Zeitraum von mehreren Jahren funktionstüchtig bleibt. Zur Verwendung des Transportbehälters zur Aufnahme eines oder mehrerer bei einem Unfall ausgebrochener Zähne muß die Bedienungsperson einen Druck auf das Behälteroberteil 9 ausüben, um den Dorn 10 gegen die Wandungen 7', 7 der Kammer 6 zu bewegen. Der Dorn 10 verformt die Wandungen 7', 7, bis diese aufbrechen, um die in Pulver- oder Granulatform vorliegende Aufbewahrungssubstanz in den Behälterunterteil 1 und damit in die Flüssigkeit 3 eintreten zu lassen. Da die freie Fläche der Wandung 7', bedingt durch deren Befestigung an der Haltefläche 8, geringer ist als die freie Fläche der Wandung 7, wird die Wandung 7 in stärkerem Maße trichterförmig verformt, so daß ein sicheres Austreten der Aufbewahrungssubstanz 5 gewährleistet ist. Die Bedienungsperson muß nunmehr den Transportbehälter schütteln, um die Aufbewahrungssubstanz 5 in der Flüssigkeit 3 zu lösen. Anschließend kann der Deckel 2 abgeschraubt werden, um den oder die Zähne in die nunmehr frisch aufbereitete Nährmediumlösung einzulegen.

Um kenntlich zu machen, daß der erfindungsgemäße Transportbehälter sich in einem gebrauchsfähigen Zustand befindet, kann, beispielsweise mittels einer im Bereich des Deckels 2 und des Behälterunterteils 1 umlaufenden Klebefolie, eine Versiegelung erfolgen, deren Beschädigung anzeigt, daß der Deckel 2 bereits entfernt wurde.

Die Erfindung ist nicht auf das gezeigte Ausführungsbeispiel beschränkt. Vielmehr ist es möglich, in dem oberhalb der oberen Folie 8 ausgebildeten Kammer eine weitere Substanz einzufüllen, so daß hier zwei unterschiedliche Substanzen eingesetzt werden können. Weiterhin ist der Transportbehälter nicht nur auf die Lagerung von Zähnen beschränkt, es ist vielmehr auch möglich, andere Körperteile auf diese Weise zwischenzeitlich aufzubewahren und zu transportieren.

## Patentansprüche

1. Transportbehälter mit einem Behälterunterteil und einem wiederverschließbaren Deckel, geeignet für eine physiologische Aufbewahrung traumatisch eliminierter oder sehr stark gelockerter, noch lebensfähiger Zähne, wobei der Transportbehälter luft- und bakteriendicht verschließbar und zumindest zum Teil mit einer Flüssigkeit (3) gefüllt ist, wobei im Transportbehälter eine von außen ohne Öffnung des Transportbehälters mit dem Behälterinnenraum (4) in Verbindung bringbare, mit einer Trockensubstanz (5) gefüllte, dicht verschlossene Kammer (6) angeordnet ist und wobei der Deckel (2) als Schraubdeckel ausgebildet ist und die Kammer (6) im Deckel (2) ausgebildet ist, dadurch gekennzeichnet, daß die Substanz (5) ein Zellnährmedium ist, dem pilz- und/oder bakterienwachstumshemmende Substanzen zugesetzt sind, daß die zueinander im wesentlichen parallen Wandungen (7, 7') der Kammer beim Verschließen des Transportbehälters zwischen dem Behälterunterteil (1) und dem Deckel (2) klemmbar sind, daß die Kammer (6) durch die im wesentlichen parallel zueinander verlaufenden Wandungen (7,7') als einfacher zylindrischer Raum ausgebildet ist und daß der Deckel (2) eine ringförmige, dem Behälterinnenraum (4) zugewandte, mit der obigen Wandung (7') dicht verbundene Haltefläche (8) aufweist.

2. Transportbehälter nach Anspruch 1, dadurch gekennzeichnet, daß die Flüssigkeit (3) in Form bidestillierten Wassers vorliegt.

3. Transportbehälter nach Anspruch 1, dadurch gekennzeichnet, daß dem Zellnährmedium Sauerstoff produzierende Substanzen zugesetzt sind.

4. Transportbehälter nach einem der Ansprüche 1 bis 3, dadurch gekennzeichnet, daß eine dem Behälterinnenraum zugewandte Wandung der Kammer (7) durch Verformung des Deckels (2) von außen aufreißbar ist.

5. Transportbehälter nach Anspruch 4, dadurch gekennzeichnet, daß der Deckel (2) einen am Deckeloberteil (9) ausgebildeten, im Bereich der Ausnehmung der Haltefläche (8) in die Kammer (6) einbringbaren Durchtrenndorn (10) aufweist.

6. Transportbehälter nach einem der Ansprüche 1 bis 3, dadurch gekennzeichnet, daß der Deckel (2) zur Durchtrennung der Wandungen (7, 7') verformbar ist.

7. Transportbehälter nach einem der Ansprüche 4 bis 6, dadurch gekennzeichnet, daß die Wandung (7,7') in Form einer Metallfolie ausgebildet ist.

8. Transportbehälter nach einem der Ansprüche 4 bis 7, dadurch gekennzeichnet, daß der Dorn (10) zur Ausbildung eines trichterförmigen Loches in der Wandung (7, 7') der Kammer (6) kegelförmig ausgebildet ist.

## Claims

1. A container with a container base and a resealable lid, suitable for a physiological storage of traumatically removed or very strongly loosened teeth which are still viable, the container being sealable in an air-tight and bacteria-tight manner and being filled at least partially with a fluid (3), a tightly sealed chamber (6) being arranged in the container, which chamber (6) can be connected to the container interior (4) from the outside without opening the container and is filled with a dry substance (5), the lid (2) being formed as a screw-on lid, and the chamber (6) being formed in the lid (2), **characterised in that** the substance (5) is a cell nutrient medium, to which substances are added which inhibit the growth of fungi and/or bacteria, **in that** the walls (7,7') of the chamber, which are substantially parallel to one another, can be clamped between the container base (1) and the lid (2) when the container is sealed, **in that** the chamber (6) is formed as a simple cylindrical space by the walls (7,7'), which extend substantially parallel to one another, and **in that** the lid (2) has an annular supporting surface (8) which faces the container interior (4) and is connected tightly to the upper wall (7').

2. A container according to Claim 1, **characterised in that** the fluid (3) is in the form of bi-distilled water.

3. A container according to Claim 1, **characterised in that** oxygenproducing substances are added to the cell nutrient medium.

4. A container according to any one of Claims 1 to 3, **characterised in that** a wall of the chamber (7) facing the container interior can be torn open from the outside by deforming the lid (2).

5. A container according to Claim 4, **characterised in that** the lid (2) has a piercing spike (10) which is formed on the upper part (9) of the lid and can be introduced into the chamber (6) in the region of the recess in the supporting surface (8).

6. A container according to any one of Claims 1 to 3, **characterised in that** the lid (2) can be deformed in order to pierce the walls (7,7').

7. A container according to any one of Claims 4 to 6, **characterised in that** the wall (7,7') takes the form of a metal foil.

8. A container according to any one of Claims 4 to 7, **characterised in that** the spike (10) is conical in order to form a funnel-shaped hole in the wall (7,7') of the chamber (6).

## Revendications

1. Conteneur de transport comprenant une partie inférieure et un couvercle refermable, adapté à la conservation physiologique de dents encore viables qui ont été extraites sous conditions traumatiques ou qui étaient très branlantes, le conteneur pouvant être fermé de façon étanche à l'air et aux bactéries, et étant au moins partiellement rempli d'un liquide (3); le conteneur comprenant une chambre hermétiquement fermée (6), remplie d'une matière sèche (5) et pouvant être mise en contact avec l'intérieur du conteneur (4) depuis l'extérieur, sans ouvrir le conteneur ; le couvercle (2) étant réalisé comme un couvercle à vis et la chambre (6) étant formée dans le couvercle (2),
caractérisée par le fait que la matière sèche (5) est un nutriment cellulaire additionné de substances inhibitrices de la prolifération fongique et/ou bactérienne, que les parois de la chambre, sensiblement parallèles entre elles (7, 7'), peuvent être coincées, lors de la fermeture du conteneur, entre la partie inférieure du conteneur (1) et le couvercle (2), que la chambre (6), en raison du fait que les parois sont sensiblement parallèles entre elles (7, 7'), a la forme d'un volume cylindrique simple, et que le couvercle (2) présente une surface de maintien (8) annulaire orientée vers l'intérieur du conteneur (4) et solidement fixée à la paroi ci-dessus (7').

2. Conteneur de transport selon la revendication 1, caractérisé par le fait que le liquide (3) est de l'eau bi-distillée.

3. Conteneur de transport selon la revendication 1, caractérisé par le fait que le nutriment cellulaire est additionné de substances produisant de l'oxygène.

4. Conteneur de transport selon l'une des revendications 1 à 3, caractérisé par le fait qu'une paroi de la chambre (7) orientée vers l'intérieur du conteneur peut être déchirée depuis l'extérieur par déformation du couvercle (2).

5. Conteneur de transport selon la revendication 4, caractérisé par le fait que le couvercle (2) présente, à sa partie supérieure (9), un poinçon (10) pouvant être introduit dans la chambre (6), dans la zone de l'évidement de la surface de maintien (8).

6. Conteneur de transport selon l'une des revendications 1 à 3, caractérisé par le fait que le couvercle (2) peut être déformé pour déchirer les parois (7, 7').

7. Conteneur de transport selon l'une des revendications 4 à 6, caractérisé par le fait que la paroi (7, 7') se présente sous la forme d'une feuille métallique.

8. Conteneur de transport selon l'une des revendications 4 à 7, caractérisé par le fait que le poinçon (10) présente une forme conique permettant de faire un trou en forme d'entonnoir dans la paroi (7, 7') de la chambre (6).
